(19) Europäisches Patentamt
European Patent Office
Office européen des brevets

(11) EP 1 163 303 B1

(12) EUROPÄISCHE PATENTSCHRIFT

(45) Veröffentlichungstag und Bekanntmachung des Hinweises auf die Patenterteilung:
**16.06.2004 Patentblatt 2004/25**

(21) Anmeldenummer: **00916854.3**

(22) Anmeldetag: **21.02.2000**

(51) Int Cl.[7]: **C09D 7/12**, B05D 7/00

(86) Internationale Anmeldenummer:
**PCT/EP2000/001412**

(87) Internationale Veröffentlichungsnummer:
**WO 2000/050523 (31.08.2000 Gazette 2000/35)**

(54) **DIE VERWENDUNG VON TRICYCLODECANDIMETHANOL ZUR HERSTELLUNG VON MEHRSCHICHTLACKIERUNGEN**

UTILIZATION OF TRICYCLODECANDIMETHANOL FOR PRODUCING MULTILAYER LACQUERS

UTILISATION DE TRICYCLODECANE DIMETHANOL POUR LA PRODUCTION DE PEINTURES MULTICOUCHES

(84) Benannte Vertragsstaaten:
**DE ES FR**

(30) Priorität: **25.02.1999 DE 19907978**
**03.02.2000 DE 10004750**

(43) Veröffentlichungstag der Anmeldung:
**19.12.2001 Patentblatt 2001/51**

(73) Patentinhaber: **BASF Coatings AG**
**48165 Münster (DE)**

(72) Erfinder:
- **BAUMGART, Hubert**
  **D-48163 Münster (DE)**
- **RINK, Heinz-Peter**
  **D-48153 Münster (DE)**
- **RÖCKRATH, Ulrike**
  **D-48308 Senden (DE)**
- **FARWICK, Thomas**
  **D-48727 Billerbeck (DE)**

(74) Vertreter: **Fitzner, Uwe, Dr. et al**
**Lintorfer Strasse 10**
**40878 Ratingen (DE)**

(56) Entgegenhaltungen:
**EP-A- 0 785 034** **DE-A- 2 200 022**

- **DATABASE WPI Section Ch, Week 199212 Derwent Publications Ltd., London, GB; Class A82, AN 1992-093039 XP002141305 & JP 04 036364 A (TOYOBO KK), 6. Februar 1992 (1992-02-06)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die neue Verwendung von Tricyclodecandimethanol zur Herstellung von und als Haftvermittler in Mehrschichtlackierungen, insbesondere von mehrschichtigen Klarlacken. Außerdem betrifft die vorliegende Erfindung einen neuen Beschichtungsstoff, insbesondere einen neuen Klarlack, welcher Tricyclodecandimethanol enthält. Des weiteren betrifft die vorliegende Erfindung ein neues Verfahren zur Verbesserung der Zwischenschichthaftung in mehrschichtigen Klarlacken. Des weiteren betrifft die Erfindung eine neue Mehrschichtlackierung, enthaltend einen Mehrschicht-Klarlack. Darüber hinaus betrifft die vorliegende Erfindung ein neues Verfahren zur Herstellung von Mehrschichtlackierungen, welches auf dem Naß-in-naß-Verfahren beruht. Nicht zuletzt betrifft die vorliegende Erfindung die Verwendung der neuen Mehrschichtlackierungen insbesondere in der Automobilserienlackierung, der Autoreparaturlackierung und der industriellen Lackierung, inklusive Container Coating und Coil Coating.

Die Anforderungen an die Beständigkeit von Decklacken, welche der Witterung, insbesondere der Sonneneinstrahlung und dem sauren Regen, und zudem auch noch häufiger mechanischer Beanspruchung, insbesondere durch Waschbürstenreinigungsanlagen, ausgesetzt sind, werden stetig höher. Dies gilt ganz besonders für die Fahrzeuglackierungen, welche diese Anforderungen erfüllen und zusätzlich noch höchste optische Ansprüche an Glanz, Oberflächenglätte und Farbe befriedigen müssen.

Bisher wurde dieses Problem dadurch gelöst, daß entsprechend den gestiegenen Anforderungen an die Umweltverträglichkeit eine im wesentlichen aus wäßrigen Beschichtungsstoffen aufgebaute Mehrschichtlackierung auf die Substrate appliziert wird. Im Falle von Metallsubstraten wird diese bekanntermaßen aus einem wäßrigen Elektrotauchlack, einem Wasserfüller, einem Wasserbasislack und einem lösemittelhaltigen Klarlack hergestellt. Der Elektrotauchlack und der Wasserfüller werden jeweils nach ihrer Applikation eingebrannt und bilden dann die Grundierung. Hierauf wird der Wasserbasislack appliziert und zwischengetrocknet. Auf diese noch nicht ausgehärtete Schicht wird der Klarlack aufgetragen, wonach die beiden Schichten gemeinsam gehärtet werden (Naß-in-naß-Verfahren). Werden Kunststoffe als Substrate verwendet, werden bekanntermaßen an Stelle der Elektrotauchlacke Hydrogrundierungen angewandt.

Das Naß-in-naß-Verfahren für die Herstellung von mehrschichtigen Decklackierungen ist beispielsweise in den Patentschriften US-A-3,639,147, DE-A-33 33 072, DE-A-38 14 853, GB-A-2 012 191, US-A-3,953,644, EP-A-0 260447, DE-A-39 03 804. EP-A-0 320 552, DE-A-36 28 124, US-A-4,719,132, EP-A-0 297 576, EP-A-0 069 936, EP-A-0 089 497, EP-A-0 195 931, EP-A-0228 003, EP-A-0 038 127 und DE-A-28 18 100 beschrieben.

Für das optische oder visuelle Erscheinungsbild und die Witterungsbeständigkeit sind vor allem die beiden obersten Schichten der Mehrschichtlackierungen verantwortlich. So gibt der Wasserbasislack der Mehrschichtlackierung die Farbe und/oder optischen Effekte wie Metallic-Effekte oder Interferenzeffekte, während der Klarlack neben der Kratz- und Etchbeständigkeit, d. h. die Beständigkeit gegen umweltbedingte schädigende Substanzen, für das sogenannte Appearance, d. h. den Glanz, die Brillanz und den Verlauf, sorgt. Wasserbasislack und Klarlack müssen hierbei sehr fein aufeinander abgestimmt sein, um einen Verbund mit dem gewünschten vorteilhaften Eigenschaftsprofil zu liefern.

Wasserbasislacke sowie die entsprechenden Lackierungen, welche diesen Anforderungen im wesentlichen gerecht werden, sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721. EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747 oder EP-A-0 401 565 bekannt.

Diese Wasserbasislacke enthalten vor allem anionisch stabilisierte Polyurethane, wobei als Neutralisationsmittel mehrfach funktionelle Amine und/oder Aminoalkohole, wie Triethylamin, Methylethanolamin und/oder Dimethylethanolamin Verwendung finden.

In der modernen Autoserien- und -reparaturlackierung werden heutzutage zahlreiche unterschiedliche Klarlacke verwendet wie die lösemittelhaltigen Einkomponenten(1K)-, Zweikomponenten(2K)- oder Mehrkomponenten(3K, 4K)-Klarlacke, die wäßrigen Zweikomponenten(2K)- oder Mehrkomponenten(3K. 4K)-Klarlacke, die Pulverklarlacke, die Pulverslurry-Klarlacke oder die UV-Klarlacke, insbesondere die lösemittelfreien oder pulverförmigen. Alle diese Klarlacke weisen ganz spezifische Vorteile auf. die man für den jeweiligen Verwendungszweck gezielt nutzen will.

So liefern beispielsweise Einkomponenten(1K)-Klarlacke Mehrschichtlackierungen, die höchsten optischen Anforderungen genügen und abreibfest sind, indes sind die betreffenden Klarlack-schichten oftmals nicht genügend witterungsbeständig. Dagegen sind die sehr Klarlackschichten auf der Basis von Zweikomponenten(2K)- oder Mehrkomponenten(3K, 4K)-Klarlacken zwar witterungsstabil, indes oftmals nicht genügend abriebfest.

Es wäre deshalb grundsätzlich wünschenswert, im Rahmen einer Mehrschichtlackierung die spezifischen Vorteile stofflich unterschiedlicher Klarlackschichten miteinander zu kombinieren, um so mehrschichtige Klarlackschichten zu erhalten. welche beispielsweise sowohl witterungsstabil als auch abriebfest sind. Dieses sollte außerdem

ohne zusätzlichen Aufwand für den Anwender realisiert werden.

Indessen läßt sich dies nicht ohne weiteres verwirklichen, weil bei der Kombination der bekannten Klarlacke zu mehrschichtigen Klarlackschichten schwerwiegende Probleme der Zwischenschichthaftung auftreten. Diese können dazu führen, daß nicht nur die oberste Klarlackschicht delaminiert, sondern auch die darunter liegende. Diese Probleme sind besonders evident bei der Autoreparaturlackierung, bei der ja der Reparaturklarlack einen haftfesten Verbund mit der Klarlackschicht der Automobilserienlackierung bilden muß. Bisher konnte dieses Problem der Zwischenschichthaftung nur durch das Anschleifen der zu reparierenden Klarlackschicht gelöst werden. Indes stellt diese Verfahrensmaßnahme einen zusätzlichen Arbeitsschritt im Lackierbetrieb dar, was grundsätzlich von Nachteil ist.

Die Verwendung von Tricyclodecandimethanol (TCDMM) in Mehrschichtlackierungen, wobei TCDMM als Bestandteil des Polyesterbindemittels vorliegt, ist aus EP 0 785 034 bekannt. Nicht in der EP 0 785 034 offenbart sind hingegen Beschichtungen, in denen TCDMM als individueller Bestandteil vorliegt.

Aufgabe der vorliegenden Erfindung ist es, eine neue Mehrschichtlackierung bereitzustellen, welche die Nachteile des Standes der Technik nicht mehr länger aufweist, sondern neben einem hervorragenden optischen Eigenschaftsprofil bzw. einer hervorragenden Appearance eine hohe Härte, Kratzfestigkeit und Etchbeständigkeit aufweist, wobei Oberflächenstörungen und Delaminationen nicht länger auftreten. Außerdem war es die Aufgabe der vorliegenden Erfindung ein neues Verfahren zur Herstellung von Mehrschichtlackierungen bereitzustellen, welches in einfacher Weise sicher und zuverlässig die neuen Mehrschichtlackierungen liefert.

Demgemäß wurde der neue Beschichtungsstoff, insbesondere der neue Klarlack, gefunden, welcher mindestens ein Bindemittel und mindestens ein Vemetzungsmittel sowie Tricyclodecandimethanol enthält.

Im folgenden wird der neue Beschichtungsstoff als "erfindungsgemäßer Beschichtungsstoff" bezeichnet.

Außerdem wurde die neue Mehrschichtlackierung auf einem gegebenenfalls grundierten Substrat gefunden mit

(A) einer Basislackschicht,

(B) einer ersten Klarlackschicht als Zwischenschicht und

(C) einer zweiten Klarlackschicht als oberste Schicht,

dadurch gekennzeichnet, daß mindestens einer der zur Herstellung der Klarlackschichten (B) und (C) angewandten Beschichtungsstoffe (B) und (C) Tricyclodecandimethanol in wirksamen Mengen enthält.

Im folgenden wird die neue hochkratzfeste Mehrschichtlackierung als "erfindungsgemäße Mehrschichtlackierung" bezeichnet.

Außerdem wurde das neue Verfahren zur Herstellung einer Mehrschichtlackierung gefunden, das mindestens die folgenden Verfahrensschritte umfaßt:

(I) Applikation eines Basislacks (A) auf einem gegebenenfalls grundierten Substrat.

(II) Zwischentrocknen des applizierten Basislacks (A),

(III) Applikation eines ersten Klarlacks (B),

(IV) gemeinsames Aushärten der in den Verfahrensschritten (I) und (III) applizierten Schichten (A) und (B) (Naß-in-naß-Verfahren),

(V) Applikation einer stofflich von der ersten Klarlackschicht (B) verschiedenen zweiten Klarlackschicht (C) auf die im Verfahrensschritt (IV) ausgehärtete Klarlackschicht (B) und

(VI) Aushärten der im Verfahrensschritt (V) applizierten Klarlackschicht (C)

oder alternativ

(I) Applikation des Basislacks (A) auf einem gegebenenfalls grundierten Substrat,

(II) Zwischentrocknen des applizierten Basislacks (A).

(III) Applikation des ersten Klarlacks (B),

(IV) Zwischentrocknen des applizierten Klarlacks (B),

(V) Applikation einer zweiten Klarlackschicht (C) auf die im Verfahrensschritt (IV) zwischengetrocknete Klarlackschicht (B) und

(VI) gemeinsames Aushärten der Lackschichten (A), (B), und (C) (Naß-in-naß-Verfahren),

dadurch gekennzeichnet, daß mindestens einer der zur Herstellung der Klarlackschichten (B) und (C) angewandten Beschichtungsstoffe (B) und (C) Tricyclodecandimethanol in wirksamen Mengen enthält.

Im folgenden wird das neue Verfahren zur Herstellung einer Mehrschichtlackierung der Kürze halber als "erfindungsgemäßes Verfahren" bezeichnet.

Im Hinblick auf den Stand der Technik war es überraschend und für den Fachmann nicht vorhersehbar. daß die Aufgabe, welche der vorliegenden Erfindung zugrundeliegt, mit Hilfe der neuartigen Verwendung von Tricyclodecandimethanol im Rahmen der erfindungsgemäßen Mehrschichtlackierung und des erfindungsgemäßen Verfahrens gelöst werden konnte. Insbesondere war es überraschend, daß trotz des Mehrschichtaufbaus der Klarlackschicht keine Probleme der Zwischenschichthaftung und damit Delamination mehr auftreten. Noch mehr überraschte, daß es aufgrund der neuartigen Verwendung von Tricyclodecandimethanol möglich wird. die Klarlackschicht (B) und (C) stofflich breit zu variieren, so daß die unterschiedlichsten vorteilhaften Eigenschaftsprofile in einfacher und dabei eleganter Weise eingestellt werden können. Dadurch können die erfindungsgemäßen Mehrschichtlackierungen besonders einfach und genau den Erfordernissen des jeweiligen Verwendungszwecks angepaßt werden.

Der erfindungswesentliche Bestandteil des erfindungsgemäßen Beschichtungsstoffs, insbesondere des erfindungsgemäßen Klarlacks, ist Tricyclodecandimethanol. Darüber hinaus enthält der erfindungsgemäße Beschichtungsstoff noch mindestens ein Bindemittel und mindestens ein Vernetzungsmittel.

Hierbei kann der Gehalt an Tricyclodecandimethanol breit variieren. Erfindungsgemäß werden Mengen von 0,2 bis 20 Gew.-%, vorzugsweise 1,0 bis 7,0 Gew.-% und insbesondere 2,0 bis 5,0 Gew.-%, jeweils bezogen auf den erfindungsgemäßen Beschichtungsstoff, angewandt.

Erfindungsgemäß kommen als Bindemittel sämtliche Oligomere und Polymere in Betracht, wie sie auf dem Lackgebiet, üblicherweise als Bindemittel angewandt werden. Besonders geeignet sind Bindemittel, wie sie in Klarlacken angewandt werden.

Dementsprechend kommen erfindungsgemäß als Vernetzungsmittel sämtliche Verbindungen in Betracht, wie sie auf dem Lackgebiet üblicherweise verwendet werden. Besonders geeignet sind Vernetzungsmittel, wie sie in Klarlacken angewandt werden.

Der erfindungsgemäße Beschichtungsstoff wird deshalb bevorzugt als Klarlack verwendet, insbesondere als Einkomponenten(1K)-, lösemittelhaltiger Zweikomponenten(2K)- oder Mehrkomponenten(3K, 4K)-Klarlack, wäßriger Zweikomponenten(2K)- oder Mehrkomponenten(3K, 4K)-Klarlack, Pulverklarlack, Pulverslurry-Klarlack oder UV-Klarlack, insbesondere als lösemittelfreier oder pulverförmiger UV-Klarlack.

Der erfindungsgemäße Beschichtungsstoff kann für sich alleine zur Herstellung von Lackierungen verwendet werden. Beispielsweise kann er der Beschichtung von grundiertem oder ungrundiertem Metall, Glas, Holz, Kunststoff oder Papier mit einem einschichtigen oder einem mehrschichtigen Klarlack dienen.

Die besonderen Vorteile des erfindungsgemäßen Beschichtungsstoffs treten indes bei seiner Verwendung zur Herstellung der erfindungsgemäßen Mehrschichtlackierungen besonders offen zutage.

Für die erfindungsgemäße Mehrschichtlackierung ist es wesentlich, daß mindestens zwei, bevorzugt zwei. Klarlackschichten übereinander appliziert werden. Hierbei ist es grundsätzlich möglich, einen erfindungsgemäßen Beschiehtungsstoff zu verwenden, d. h., daß sich die Klarlackschichten stofflich nicht voneinander unterscheiden.

Erfindungsgemäß ist es indes von Vorteil, wenn sich die Klarlackschichten Stofflich voneinander unterscheiden, d. h.. daß zumindest eine erste Klarlackschicht (B) und eine zweite Klarlackschicht (C) verwender wird. da hierbei die erfindungsgemäß gewünschte Kombination der vorteilhaften Eigenschaften unterschiedlicher Klarlacke resultiert.

In diesem Falle wird zumindest eine Klarlackschicht (B) oder die Klarlackschicht (C) aus einem erfindungsgemäßen Beschichtungsstoff hergestellt. Dabei ist Tricyclodecandimethanol in dem Klarlack (B), welche der Herstellung der Klarlackschicht (B) dient, oder in dem Klarlack (C), welcher der Herstellung der Klarlackschicht (C) dient, in wirksamen Mengen, insbesondere in den vorstehend angegebenen Mengen, enthalten. Erfindungsgemäß ist es von Vorteil. wenn Tricyclodecandimethanol in dem erfindungsgemäßen Klarlack (B) vorhanden ist.

Erfindungsgemäß kann es sich aber bei den Klarlacken (B) und (C) um erfindungsgemäße Beschichtunasstoffe handeln, die sich stofflich voneinander unterscheiden.

Welcher Variante im einzelnen der Vorzug gegeben wird, richtet sich nach dem gewünschten Eigenschaftsprofil der erfindungsgemäßen Mehrschichtlackierung und danach, wie gravierend die Probleme der Zwischenschichthaftung sind, die gelöst werden müssen.

Die erfindungsgemäß bevorzugte Basis der erfindungsgemäßen Beschichtungsstoffe sind demnach alle üblichen und bekannten Klarlacke, welche thermisch und/ oder mit aktinischer Strahlung gehärtet werden. Im Rahmen der vorliegenden Erfindung ist unter aktinischer Strahlung Elektronenstrahlung und UV-Strahlung, insbesondere UV-Strahlung, zu verstehen.

Die Klarlacke enthalten in den Bindemitteln und den Vernetzungsmitteln reaktive funktionelle Gruppen, welche Vemetzungsreaktionen miteinander eingehen (Prinzip der komplementären Gruppen).

Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen. einen aromatischen und/oder einen aromatisch-aliphatischen (araliphatischen) Rest; die Variablen $R^1$ und $R^2$ stehen für gleiche oder verschiedene aliphatische Reste oder sind mit einander zu einem aliphatischen oder heteroaliphatischen Ring verknüpft.

**Übersicht: Beispiele komplementärer funktioneller Gruppen im**

| Bindemittel | und | Vernetzungsmittel |
|---|---|---|
| | oder | |
| Vernetzungsmittel | und | Bindemittel |
| -SH | | -C(O)-OH |
| $-NH_2$ | | -C(O)-O-C(O)- |
| -OH | | -NCO |
| | | -NH-C(O)-OR |
| | | $-CH_2$-OH |

| | |
|---|---|
| | $-CH_2-O-CH_3$ |
| | $-NH-C(O)-CH(-C(O)OR)_2$ |
| | $-NH-C(O)-CH(-C(O)OR)(-C(O)-R)$ |
| | $-NH-C(O)-NR^1R^2$ |
| | $= Si(OR)_2$ |
| | 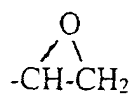 |
| $-C(O)-OH$ | 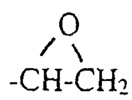 |
| $-O-C(O)-CR=CH2$ | $-OH$ |
| $-O-CR=CH_2$ | $-NH_2$ |
| | $-C(O)-CH_2-C(O)-R$ |
| | $-CH=CH_2$ |

Beispiele geeigneter Einkomponenten(1K)-, Zweikomponenten(2K)- oder Mehrkomponenten(3K, 4K)-Klarlacke sind beispielsweise aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 bekannt.

Einkomponenten(1K)-Klarlacke enthalten insbesondere hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerten Aminoplastharzen.

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Beispiele geeigneter Bindemittel für diese Klarlacke sind Oligomere und/oder Polymere mit mindestens zwei seitenständigen oder endständigen Carbamatgruppen und/oder Allophanatgruppen der Formeln:

$$-O-(CO)-NH_2 \qquad -O-(CO)-NH-(CO)-NH_2$$

Als Oligomere und/oder Polymere kommen grundsätzlich alle üblichen und bekannten Oligomere oder Polymere in Betracht. Beispiele geeigneter Oligomere und Polymere sind lineare und/oder verzweigte und/oder blockartig, kammartig und/oder statistisch aufgebaute Copolymerisate von ethylenisch ungesättigten Monomeren, insbesondere Poly(meth)acrylate, sowie Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe, von denen die Copolymerisate von ethylenisch ungesättigten Monomeren, insbesondere Poly(meth)acrylate, besonders vorteilhaft sind und deshalb besonders bevorzugt verwendet werden.

Die Einführung der Carbamatgruppe kann durch den Einbau von Monomeren, welche diese Gruppen enthalten. erfolgen. Beispiele geeigneter Monomerer dieser Art sind ethylenisch ungesättigte Monomere. welche eine Carbamatgruppe oder eine Allophanatgruppe enthalten.

Beispiele geeigneter ethylenisch ungesättigter Monomere, welche eine Carbamatgruppe enthalten, werden in den Patentschriften EP-A-0 675 141, US-A- 3,479,328, US-A-3,674,838, US-A- 4,126,747, US-A- 4.279.833 oder US-A-4,340.497 beschrieben.

Die Einführung der Carbamatgruppe kann aber auch durch polymeranaloge Reaktionen in die Oligomeren und/oder Polymeren eingeführt werden. Beispiele geeigneter Methoden dieser Art sind aus den Patentschriften US-A-4,758,632, US-A-4,301,257 oder US-A- 2,979,514 bekannt.

Beispiele für besonders bevorzugt zu verwendende Poly(meth)acrylate sind aus den Patentschriften US-A-5,474,811, US-A-5,356,669, US-A-5,605,965, WO 94/10211, WO 94/10212, WO 94/10213, EP-A-0 594 068, EP-A-0 594 071 oder EP-A-0 594 142 bekannt.

Zur Einführung von Allophanatgruppen werden Oligomere und Polymere, welche mindestens zwei, vorzugsweise mindestens drei primäre und/oder sekundäre, insbesondere aber primäre, Hydroxylgruppen aufweisen, mit Allophansäurealkyl- und -arylestern bei 30 bis 200 °C, vorzugsweise 50 bis 160 °C, besonders bevorzugt 60 bis 150 °C und insbesondere 80 bis 140 °C transallophanatisiert. Die Reaktion wird in Lösung oder in Masse, vorzugsweise in Lösung durchgeführt. Es empfiehlt sich, dem Reaktionsgemisch übliche und bekannte Inhibitoren wie Trialkylphosphite, insbesondere Triisodecylphosphit, zuzusetzen. Außerdem ist es von Vorteil, übliche und bekannte Umesterunaskatalysatoren wie Zinnverbindungen, insbesondere Dibutylzinndioxid, zu verwenden.

Beispiele geeigneter, erfindungsgemäß zu verwendender Allophanate sind Allophansäuremethyl-, Allophansäureethyl-, Allophansäurepropyl-, Allophansäurebutyl-, Allophansäurepentylester oder Allophansäurephenylester, von denen Allophansäuremethylund Allophansäureethylester besonders vorteilhaft sind und deshalb erfindungsgemäß besonders bevorzugt verwendet werden.

Als erfindungsgemäß zu verwendende Oligomere und Polymere, welche mindestens zwei. vorzugsweise mindestens drei primäre und/oder sekundäre, insbesondere aber primäre, Hydroxylgruppen aufweisen, kommen vorzugsweise lineare und/oder verzweigte und/oder blockartig. kammartig und/oder statistisch aufgebaute Copolymerisate von ethylenisch ungesättigten Monomeren, insbesondere Poly(meth)acrylate, sowie Polyester, Alkyde. Polyurethane, acrylierte Polyurethane, acrylierte Polyester, Polylactone, Polycarbonate, Polyether. Epoxidharz-Amin-Addukte, (Meth)Acrylatdiole, partiell verseifte Polyvinylester, Polyhamstoffe, oligomere Polyole, welche aus Oligomeren, die durch Metathesereaktionen von acyclischen Monoolefinen und cyclischen Monoolefinen gewonnen werden, durch Hydroformylierung und anschließender Hydrierung erhältlich sind; oder aliphatische Polyole in Betracht, von denen die Copolymerisate von ethylenisch ungesättigten Monomeren, insbesondere die Poly(meth)acrylate, besonders vorteilhaft sind und deshalb besonders bevorzugt verwendet werden.

Neben den Hydroxylgruppen können die genannten Oligomere und Polymere noch andere funktionelle Gruppen wie Acryloyl-, Ether-, Amid-, Imid-, Thio-, Carbonat- oder Epoxidgruppen enthalten.

Weitere besonders gut geeignete Bindemittel für die Einkomponenten(1K)-, Zweikomponenten(2K)- oder Mehrkomponenten(3K, 4K)-Klarlacke sind Polyacrylatharze mit einer OH-Zahl von 80 bis 200 mgKOH/g und einer Säurezahl < 20 mgKOH/g geeignet. Bevorzugt weisen die Polyacrylatharze ein zahlenmittleres Molekulargewicht Mn von 1.500 bis 30.000, vorzugsweise 2.000 bis 15.000 und insbesondere 2.500 bis 5.000 auf.

Besonders bevorzugt werden Polyacrylatharze eingesetzt, die erhältlich sind durch Copolymerisation der folgenden Monomeren in einem organischen Lösemittel oder einem Lösemittelgemisch und in Gegenwart mindestens eines Polymerisationsinitiators und ggf. in Gegenwart von Reglern:

(a1) einem von (a2), (a3), (a4), (a5), (a6) und (a7) verschiedenen, mit (a2), (a3), (a4), (a5), (a6) und (a7) copolymerisierbaren, im wesentlichen säuregruppenfreien (Meth)acrylsäureester oder einem Gemisch aus solchen Monomeren,

(a2) einem mit (a1), (cs3), (a4), (a5), (a6) und (a7) copolymerisierbaren, von (a5) verschiedenen. ethylenisch ungesättigten Monomer, das mindestens eine Hydroxylgruppe pro Molekül trägt und im wesentlichen säuregruppenfrei ist. oder einem Gemisch aus solchen Monomeren.

(a3) einem mindestens eine Säuregruppe, die in die entsprechende Säureaniongruppe überführbar ist. pro Molekül tragenden, mit (a1), (a2), (a4), (a5), (a6) und (a7) copolymerisierbaren, ethylenisch ungesättigten Monomer oder einem Gemisch aus solchen Monomeren,

(a4) gegebenenfalls einem oder mehreren vinylaromatischen Kohlenwasserstoffen.

(a5) gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül (z.B. die unter dem Namen Cardura® im Handel erhältlichen Glycidylester) oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure (z.B. die unter dem Namen Cardura® im Handel erhältlichen Glycidylester) mit 5 bis 18 C-Atomen je Molekül umgesetzt wird,

(a6) mindestens einem nachstehend im Detail beschriebenen, erfindungsgemäß zu verwendenden Polysiloxanmakromonomer sowie

(a7) gegebenenfalls einem mit (a1), (a2), (a3), (a4), (a5) und (a6) copolymerisierbaren, von (a1), (a2), (a3), (a4), (a5) und (a6) verschiedenen, im wesentlichen säuregruppenfreien, ethylenisch ungesättigten Monomer oder einem Gemisch aus solchen Monomeren,

wobei (a1), (a2), (a3), (a4), (a5), (a6) und (a7) in Art und Menge so ausgewählt werden, daß das Polyacrylatharz die gewünschte OH-Zahl, Säurezahl und das gewünschte Molekulargewicht aufweist.

Zur Herstellung der erfindungsgemäß eingesetzten Polyacrylatharze kann als Monomer (a1) jeder mit (a2), (a3), (a4), (a5), (a6) und (a7) copolymerisierbare. im wesentlichen säuregruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, n-Buryl-, sec.-Butyl-, tert. -Butyl-, Hexyl-, Ethylhexyl-, Stearyl- und Laurylacrylat oder -methacrylat oder cycloaliphatische (Meth)acrylsäureester, wie z.B. Cyclohexyl(meth)acrylat, Isobornyl(meth)acrylat, Dicyclopentadienyl(meth)acrylat und tert.-Butylcyclohexyl (meth)acrylat, genannt.

Als Monomer (a1) können auch Ethyltriglykol(meth)acrylat und Methoxyoligoglykol(meth)acrylat mit einem zahlenmittleren Molekulargewicht Mn von vorzugsweise 550 oder andere ethoxylierte und/oder propoxylierte hydroxylgruppenfreie (Meth)acrylsäurederivate eingesetzt werden.

Als Monomer (a2) können mit (a1), (a3), (a4), (a5), (a6) und (a7) copolymerisierbare und von (a5) verschiedene, ethylenisch ungesättigte Monomere, die mindestens eine Hydroxylgruppe pro Molekül tragen und im wesentlichen säuregruppenfrei sind oder ein Gemisch aus solchen Monomeren eingesetzt werden. Als Beispiele werden Hydroxyalkylester der Acrylsäure, Methacrylsäure oder einer anderen alpha.beta-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Monomer (a2) werden vorzugsweise Hydroxyalkylester der Acrylsäure oder Methacrylsäure, in denen die Hydroxyalkylgruppe bis zu 20 Kohlenstoffatome enthält, Umsetzungsprodukte aus cyclischen Estern. wie z.B. epsilon-Caprolacton und diesen Hydroxyalkylestern, oder Mischungen aus diesen Hydroxyalkylestern bzw. epsilon-caprolactonmodifizierten Hydroxyalkylestern eingesetzt.

Als Beispiele für derartige Hydroxyalkylester werden 2-Hydroxyethylacrylat. 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat, 4-Hydroxybutylmethacrylat, Methylpropandiolmonoacrylat, Methylpropandiolmonomethacrylat, Hydroxystearylacrylat und Hydroxystearylmethacrylat genannt. Entsprechende Ester von anderen ungesättigten Säuren, wie z.B. Ethacrylsäure, Crotonsäure und ähnliche Säuren mit bis zu etwa 6 C-Atomen pro Molekül, können auch eingesetzt werden.

Ferner können als Monomer (a2) auch olefinisch ungesättigte Polyole eingesetzt werden. Bevorzugte Polyacrylatharze werden erhalten, wenn als Monomer (a2) zumindest teilweise Trimethylolpropanmonoallylether eingesetzt wird. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a7). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren (a2), eingesetzt werden.

Als Monomer (a3) kann jedes mindestens eine Säuregruppe, vorzugsweise eine Carboxylgruppe, pro Molekül tragende, mit (a1), (a2), (a4), (a5), (a6) und (a7) copolymerisierbare, ethylenisch ungesättigte Monomer oder ein Gemisch aus solchen Monomeren eingesetzt werden. Als Monomer (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül eingesetzt werden. Als Beispiele für solche Säuren werden Ethacrylsäure. Crotonsäure, Maleinsäure, Fumarsäure und Itaconsäure genannt. Weiterhin können beispielsweise ethylenisch ungesättigte Sulfon- oder Phosphonsäuren, bzw. deren Teilester, als Monomer (a3) eingesetzt werden. Als Monomer (a3) können auch Maleinsäuremono(meth)acryloyloxyethylester, Bernsteinsäuremono(meth)acryloyloxyethylester und Phthalsäuremono(meth)acryloyloxyethylester eingesetzt werden.

Als fakultative Monomere (a4) werden vinylaromatische Kohlenwasserstoffe, wie Styrol, alpha-Alkylstyrole und Vinyltoluol, eingesetzt.

Als fakultative Monomere (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Die Umsetzung der Acryl- oder Methacrylsäure mit dem Glycidylester einer Carbonsäure mit einem tertiären alpha-Kohlenstoffatom kann vor, während oder nach der Polymerisationsreaktion erfolgen. Bevorzugt wird als Monomer (a5) das Umsetzunasprodukt von Acryl- und/oder Methacrylsäure mit dem Glycidylester der Versaticsäure eingesetzt. Dieser Glycidylester ist unter dem Namen "Cardura® E10" im Handel erhältlich.

Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.

Für die vorliegende Erfindung ist es wesentlich, daß die Polyacrylatharze (A) mindestens ein Polysiloxanmakromonomer (a6) einpolymerisiert enthalten.

Geeignet sind Polysiloxanrnakromonomere (a6), die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 Dalton und im Mittel 0,5 bis 2,5, bevorzugt 0.5 bis 1,5. ethylenisch ungesättigte Doppelbindungen pro Molekül aufweisen.

Geeignet sind beispielsweise die in der DE-A-38 07 571 auf den Seiten 5 bis 7, die in der DE-A 37 06 095 in den Spalten 3 bis 7, die in der EP-B-0 358 153 auf den Seiten 3 bis 6 und die in der US-A 4,754,014 in den Spalten 5 bis 9 beschriebenen Polysiloxanmakromonomere. Ferner sind auch andere Acryloxysilan-enthaltende Vinylmonomere mit den obengenannten Molekulargewichten und Gehalten an ethylenisch ungesättigten Doppelbindungen geeignet, beispielsweise Verbindungen. die herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Besonders bevorzugt werden als Monomere (a6) die in der DE-A 44 21 823 angeführten Polysiloxanmakromonomere eingesetzt.

Beispiele für als Monomere (a6) geeignete Polysiloxanmakromonomere sind auch die in der internationalen Patentanmeldung mit der Veröffentlichungsnummer WO 92/22615 auf Seite 12, Zeile 18, bis Seite 18, Zeile 10, genannten Verbindungen.

Die Polysiloxanmakromonomere (a6) sind am Markt erhältlich und werden beispielsweise unter der Marke Marubeni$^{R}$ AK5 von der Firma Toagosei vertrieben.

Die Einsatzmenge des oder der Polysiloxanmakromonomeren (a6) beträgt 0,1 bis 20 Gew.-%, vorzugsweise 1 bis 15 Gew.-%, besonders bevorzugt 2 bis 8 Gew.-% und insbesondere 3 bis 7 Gew.-%, jeweils bezogen auf das Gesamtgewicht der zur Herstellung des Polyacrylats (a) eingesetzten Monomeren.

Als fakultative Monomere (a7) können alle mit (a1), (a2), (a3), (a4), (a5) und (a6) copolymerisierbaren, von (a1), (a2), (a3). (a4), (a5) und (a6) verschiedenen, im wesentlichen säuregruppenfreien ethylenisch ungesättigten Monomere oder Gemische aus solchen Monomeren eingesetzt werden.

Als Monomere (a7) können ein oder mehrere Vinylester von in alpha-Stellung verzweigten Monocarbonsäuren mit 5 bis 18 C-Atomen im Molekül eingesetzt werden. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen. sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren. bei denen die Carboxylgruppen vorwiegend an einem quaternären Kohlenstoffatom sitzen.

Andere olefinische Ausgangsstoffe sind z.B. Propylentrimer, Propylentetramer und Düsoburylen. Die Vinylester können aber auch auf an sich bekannte Weise aus den Säuren hergestellt werden, z.B. indem man die Säure mit Acetylen reagieren läßt.

Besonders bevorzugt eingesetzte Acrylatharze werden erhalten durch Copolymerisation von

(a1) 5 bis 80 Gew.-%, bevorzugt 10 bis 70 Gew.-%, der Monomeren (a1),

(a2) 3 bis 45 Gew.-%, bevorzugt 15 bis 35 Gew.-%, der Monomeren (a2),

(a3) 0,1 bis 15 Gew.-%, bevorzugt 0,5 bis 5 Gew.-%, der Monomeren (a3),

(a4) bis zu 50 Gew.-%, bevorzugt 15 bis 45 Gew.-%, der Monomeren (a4),

(a5) bis zu 50 Gew.-%, bevorzugt 15 bis 35 Gew.-%, der Monomeren (a5)

(a6) 0,1 bis 20 Gew.-%, bevorzugt 1 bis 15 Gew.-% der Monomeren (a6) und

(a7) bis zu 30 Gew.-%, bevorzugt bis zu25 Gew.-%, der Monomeren (a6),

wobei die Summe der Gewichtsanteile der Monomeren (a1) bis (a6) jeweils 100 Gew.-% beträgt.

Die Herstellung der erfindungsgemäß eingesetzten Polyacrylatharze erfolgt in Masse oder vorteilhafterweise in einem organischen Lösemittel oder Lösemittelgemisch und in Gegenwart mindestens eines Polwnerisationsinitiators und ggf. eines Reglers. Als organische Lösemittel, Polymerisationsinitiatoren und Regler werden die für die Herstellung von Polyacrylatharzen üblichen Lösemittel. Regler und Polymerisationsinitiatoren eingesetzt. Dabei können die Lösemittel an der Reaktion mit dem Vernetzungsmittel teilnehmen und somit als Reaktivverdünner wirken.

Als Beispiele für geeignete Lösemittel werden Butylglykol, 2-Methoxypropanol, n-Butanol, Methoxybutanol, n-Propanol. Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmo-nobutylether, Trimethylolpropan, 2-Hydroxypropionsäureethylester und 3-Methyl-3-methoxybutanol sowie Derivate auf Basis Propylenglykol, z.B. Ethylethoxypropionat, Isopropoxypropanol, Methoxypropylacetat u.ä., genannt.

Beispiele geeigneter Reaktiverdünner sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7- Oxanorbonen; Beispiele geeigneter acyclischer Monoolefine sind in Kohlenwasserstoffgemischen enthalten, die in der Erdölverarbeitung durch Cracken erhalten werden ($C_5$-Schnitt); Beispiele geeigneter, erfindungsgemäß zu verwendender oligomerer Polyole weisen eine Hydroxylzahl (OHZ) von 200 bis 450. ein zahlenmittleres Molekulargewicht Mn von 400 bis 1000 und ein massenmittleres Molekulargewicht $M_w$ von 600 bis 1100 auf;

Weitere Beispiele geeigneter Reaktivverdünner sind verzweigte, cyclische und/oder acyclische $C_9$-$C_{16}$-Alkane, die mit mindestens zwei Hydroxylgruppen funktionalisiert sind, insbesondere Diethyloctandiole, sowie Cyclohexandimethanol, Hydroxypivalinsäureneopentylglykolester, Neopentylglykol, Trimethylolpropan oder Pentaerythrit.

Weitere Beispiele geeigneter Reaktiverdünner sind Dendrimere oder hyperverzweigte Verbindungen, welche aus Tetrolen als die Zentralgruppen bildenden Verbindungen, Dicarbonsäuren und/oder deren Anhydriden sowie Versatic$^R$-Säureglycidylester hergestellt werden.

Beispiele für geeignete Polymerisationsinitiatoren sind freie Radikale bildende Initiatoren, wie z.B. tert.-Butylperoxyethylhexanoat, Benzoylperoxid, Azobisisobutyronitril und tert.-Burylperbenzoat. Die Initiatoren werden bevorzugt in einer Menge von 2 bis 25 Gew.-%, besonders bevorzugt von 4 bis 10 Gew.-%, bezogen auf das Gesamtgewicht der Monomeren, eingesetzt.

Als Beispiele für geeignete Regler seien Mercaptane, wie z.B. Mercaptethanol, Thiolglykolsäureester und Chlorwasserstoffe u.ä. genannt. Die Regler werden bevorzugt in einer Menge von 0,1 bis 15 Gew.-%, besonders bevorzugt von 0,5 bis 5 Gew.-%, bezogen auf das Gesamtgewicht der Monomeren, eingesetzt.

Die Polymerisation wird zweckmäßigerweise bei einer Temperatur von 80 bis 160 Grad C, vorzugsweise 110 bis 160 °C, durchgeführt. Hierbei werden die auf dem Kunststoffgebiet üblichen und bekannten Methoden der kontinuierlichen oder diskontinuierlichen Copolymerisation unter Normaldruck oder Überdruck in Rührkesseln, Autoklaven, Rohrreaktoren oder Taylorreaktoren angewandt.

Beispiele geeigneter (Co)Polymerisationsverfahren für die Herstellung der Acrylatharze (A) werden in den Patentschriften DE-A-197 09 465, DE-C-197 09 476, DE-A-28 48 906, DE-A-195 24 182, EP-A-0 554 783, WO 95/27742 oder WO 82/02387 beschrieben.

Vorteilhaft sind Taylorreaktoren.

Taylorreaktoren. die der Umwandlung von Stoffen unter den Bedingungen der Taylorströmung dienen, sind bekannt. Sie bestehen im wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten eine Reihe unterschiedlicher Strömungsformen auf, die durch eine dimensionslose Kennzahl. die sogenannte Taylor-Zahl Ta, charakterisiert sind. Die Taylor-Zahl ist zusätzlich zur Winkelgeschwindigkeit des Rührers auch noch abhängig von der kinematischen Viskosität $\nu$ des Fluids im Spalt und von den geometrischen Parametern, dem äußeren Radius des Innenzylinders $r_i$, dem inneren Radius des Außenzylinders $r_a$ und der Spaltbreite d. der Differenz beider Radien, gemäß der folgenden Formel:

$$Ta = \omega_i \, r_i \, d \, \nu^{-1} (d/\, r_i)^{1/2} \qquad (I)$$

mit $d = r_a - r_i$.

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf. daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungssystem verhält sich somit wie ein ideales Strömungsrohr, indem die Wirbelpaare mit konstanter Verweilzeit wie ideale Rührkessel durch den Spalt wandern.

Von Vorteil sind hierbei Taylorreaktoren mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Beispiele geeigneter Vernetzungsmittel für die Einkomponenten(1K)-Klarlacke, sind Aminoplastharze, Anhydridgruppen enthaltende Verbindungen oder Harze, Epoxidgruppen enthaltende Verbindungen oder Harze. Tris(alkoxycarbonylamino)triazine, Siloxangruppen enthaltender Verbindungen oder Harze, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten, wie sie der europäischen Patentschrift EP-A-0 596 460 beschrieben werden.

Derartige Vernetzungsmittel sind dem Fachmann gut bekannt und werden von zahlreichen Firmen als Verkaufsprodukte angeboten.

Hierbei kann jedes für Decklacke oder transparente Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbarnat- oder Allophanatgruppen defunktionalisiert sind. Vernetzunasmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series. 1991, Band 13, Seiten 193 bis 207, beschrieben.

Beispiele für geeignete Polyepoxide sind insbesondere alle bekannten aliphatischen und/oder cycloaliphatischen und/oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell. Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol® EX-512 (Polyglycerolpolyglycidylether) und Denacol® EX-521 (Polyglycerolpolyglycidylether).

Die geeigneten Tris(alkoxycarbonylamino)triazine wiesen die folgende Formel auf:

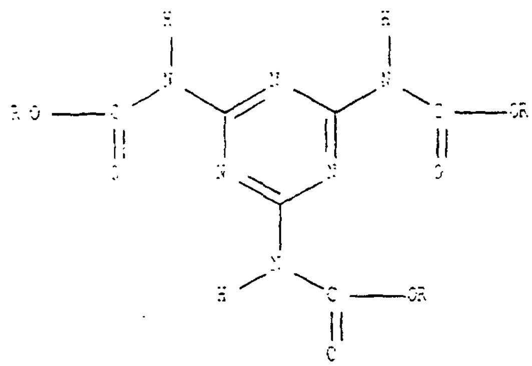

Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Beispiele geeigneter Siloxane sind Siloxane mit mindestens einer Trialkoxy- oder Dialkoxysilangruppe wie Trimethoxysiloxan.

Ein Beispiel eines geeigneten Polyanhydrids ist Polysuccinsäureanhydrid.

Beispiele geeigneter beta-Hydroxyalkylamide sind N,N,N',N'-Tetrakis(2-hydroxyethyl)adipamid oder N,N,N',N'-Tetrakis(2-hydroxypropyl)-adipamid.

Weitere Beispiele geeigneter Vernetzungsmittel sind die blockierten Polyisocyanate.

Beispiele geeigneter Blockierungsmittel sind die aus der US-Patentschrift US-A-4,444,954 bekannten Blockierungsmittel:

i) Phenole wie Phenol. Cresol, Xylenol, Nitrophenol, Chlorophenol, Ethylphenol, t-Butylphenol. Hydroxybenzoesäure. Ester dieser Säure oder 2.5- di-tert.-Buryl-4-hydroxytoluol;

ii) Lactame. wie ε-Caprolactam, δ-Valerolactam, γ-Butyrolactam oder β-Propiolactam;

iii) aktive methylenische Verbindungen, wie Diethylmalonat, Dimethylmalonat, Acetessigsäureethyl- oder -methylester oder Acetylaceton;

iv) Alkohole wie Methanol, Ethanol, n-Propanol, Isopropanol, n-Butanol. Isobutanol, t-Butanol, n-Amylalkohol, t-Amylalkohol, Laurylalkohol, Ethylenglykolmonomethylether, Ethylenglykolmonoethylether, Ethylenglykolmonoburylether, Diethylenglykolmonomethylether, Diethylenglykolmonoethylether, Propylenglykolmonomethylether, Methoxymethanol, Glykolsäure, Glykolsäureester. Milchsäure. Milchsäureester, Methylolharnstoff. Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;

v) Mercaptane wie Burylmercaptan, Hexylmercaptan, t-Butylmercaptan, t-Dodecylmercaptan, 2-Mercaptobenzothiazol, Thiophenol, Methylthiophenol oder Ethylthiophenol;

vi) Säureamide wie Acetoanilid, Acecoanisidinamid, Acrylamid, Methacrylamid, Essigsäureamid, Stearinsäureamid oder Benzamid;

vii) Imide wie Succinimid, Phthalimid oder Maleimid;

viii) Amine wie Diphenylamin, Phenylnaphthylamin, Xylidin, N-Phenylxylidin, Carbazol, Anilin, Naphthylamin, Butylamin, Dibutylamin oder Butylphenylamin;

ix) Imidazole wie Imidazol oder 2-Ethylimidazol;

x) Harnstoffe wie Harnstoff, Thioharnstoff, Ethylenharnstoff. Ethylenthioharnstoff oder 1,3-Diphenylharnstoff;

xi) Carbamate wie N-Phenylcarbamidsäurephenylester oder 2-Oxazolidon;

xii) Imine wie Ethylenimin;

xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;

xiv) Salze der schwefeligen Säure wie Natriumbisulfit oder Kaliumbisulfit;

xv) Hydroxamsäureester wie Benzylmethacrylohydroxamat (BMH) oder Allylmethacrylohydroxamat; oder

xvi) substituierte Pyrazole. Ketoxime. Imidazole oder Triazole: sowie

xvii) Gemische dieser Blockierungsmittel, insbesondere Dimethylpyrazol und Triazole, Malonester und Acetessigsäureester oder Dimethylpyrazol und Succinimid.

Beispiele geeigneter zu blockierender organischer Polyisocyanate sind insbesondere die sogenannten Lackpolyisocyanate mit aliphatisch, cycloaliphatisch, araliphatisch und/oder aromatisch gebundenen Isocyanatgruppen. Bevorzugt werden Polyisocyanate mit 2 bis 5 Isocyanatgruppen pro Molekül und mit Viskositäten von 100 bis 10.000, vorzugsweise 100 bis 5000. Außerdem können die Polyisocyanate in üblicher und bekannter Weise hydrophil oder hydrophob modifiziert sein.

Weitere Beispiele für geeignete zu blockierende Polyisocyanate sind in "Methoden der organischen Chemie", Houben-Weyl, Band 14/2, 4. Auflage, Georg Thieme Verlag, Stuttgart 1963, Seite 61 bis 70. und von W. Siefken, Liebigs Annalen der Chemie. Band 562, Seiten 75 bis 136, beschrieben. Beispielsweise geeignet sind die isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter zu blockierender Polyisocyanate sind Isocyanurat-, Biuret-, Allophanat-, Iminooxadiazindon-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate. insbesondere Hexamethylendiisocyanat, dimerisiertes und trimerisiertes Hexamethylendiisocyanat, Isophorondüsocyanat, Dicyclohexylmethan-2,4'-diisocyanat, Dicyclohexylmethan-4,4'-diisocyanat, Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden insbesondere 2-Heptyl-3,4-bis(9-isocyanatononyl)-1-pentyl-cyclohexan; oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, 1,8-Diisocyanato-4-isocyanatomethyl-octan, 1,7-Diisocyanato-4-isocyanatomethyl-heptan oder 1-Isocyanato-2-(3-isocyanatopropyl)cyclohexan oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat. wie sie durch katalytische Oligomerisierung von Hexamethylendiisocyanat unter Verwendung von geeigneten Katalysatoren entstehen, eingesetzt.

Beispiele geeigneter Vernetzungsmittel für die Zweikomponenten(2K)- oder Mehrkomponenten(3K, 4K)-Klarlacke sind die vorstehend genannten, unblockierten Polyisocyanate.

Beispiele geeigneter Pulverklarlacke sind beispielsweise aus der deutschen Patentschrift DE-A-42 22 194 oder der Produkt-Information der Firma BASF Lacke + Farben AG, "Pulverlacke", 1990 bekannt.

Pulverklarlacke enthalten als wesentliche Bestandteile bekanntermaßen epoxidgruppenhaltige Bindemittel und Polycarbonsäuren als Vernetzungsmittel und/oder carbonsäuregruppenhaltige Bindemittel und Verbindungen oder Harze mit mindestens zwei Epoxidgruppen als Vernetzunasmittel.

Beispiele geeigneter epoxidgruppenhaltiger Bindemittel sind epoxidgruppenhaltige Polyacrylatharze. welche durch Copolymerisation. insbesondere in einem Taylor-Reaktor, von mindestens einem ethylenisch ungesättigten Monomer, das mindestens eine Epoxidgruppe in Molekül enthält. mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind beispielsweise aus den Patentschriften EP-A-0 299 420, DE-B-22 14 650, DE-B-27 49 576, US-A-4,091,048 oder US-A-3,781,379

bekannt.

Beispiele geeigneter Monomere, welche keine Epoxidgruppe im Molekül enthalten, sind Alkylester der Acryl- und Methacrylsäure, insbesondere Methylacrylat, Methylmethacrylat, Ethylacrylat, Ethylmethacrylat, n-Butylacrylat, n-Burylmethacrylat, sekundär-Butylacrylat, sekundär-Butylmethacrylat, tert.-Butylacrylat. tert.-Burylmethacrylat, Neopentylacrylat, Neopenrylmethacrylat, 2-Ethylhexylacrylat oder 2-Ethylhexylmethacrylat; Amide der Acrylsäure und Methacrylsäure, insbesondere Acrylamid und Methacrylsäureamid; vinylaromatische Verbindungen, insbesondere Styrol, Methylstyrol oder Vinyltoluol; die Nitrile der Acrylsäure und Methacrylsäure; Vinyl- und Vinylidenhalogenide, insbesondere Vinylchlorid oder Vinylidenfluorid: Vinylester, insbesondere Vinylacetat und Vinylpropionat; Vinylether, insbesondere n-Butylvinylether; oder hydroxylgruppenhaltige Monomere, insbesondere Hydroxyethylacrylat, Hydroxyethylmethacrylat, Hydroxypropylacrylat, Hydroxypropylmethacrylat, 4-Hydroxybutylacrylat oder 4-Hydroxybutylmethacrylat.

Beispiele geeigneter erfindungsgemäß zu verwendender epoxyfunktioneller Monomerer sind Glycidylacrylat, Glycidylmethacrylat oder Allylglycidylether.

Das epoxidgruppenhaltige Polyacrylatharz weist üblicherweise ein Epoxidäquivalentgewicht von 400 bis 2500, vorzugsweise 420 bis 700, ein zahlenmittleres Molekulargewicht Mn (gelpermeationschromatographisch unter Verwendung eines Polystyrolstandards bestimmt) von 2000 bis 20000, vorzugsweise 3000 bis 10000, und eine Glasübergangstemperatur Tg von 30 bis 80, vorzugsweise 40 bis 70, besonders bevorzugt 40 bis 60 und insbesondere 48 bis 52 °C (gemessen mit Hilfe der Differential Scanning Calorimetry (DSC)) auf .

Beispiele geeigneter Vernetzungsmittel für diese epoxidgruppenhaltigen Polyacrylatharze sind Polycarbonsäuren, insbesondere gesättigte, geradkettige, aliphatische Dicarbonsäuren mit 3 bis 20 Kohlenstoffatomen im Molekül. An ihrer Stelle oder zusätzlich zu ihnen können auch carboxyfunktionelle Polyester verwendet werden. Ganz besonders bevorzugt wird Dodecan-1,12-dicarbonsäure verwendet.

Beispiele geeigneter carboxylgruppenhaltiger Bindemittel für die Pulverklarlacke sind die vorstehend beschriebenen carboxylgruppenhaltigen Bindemittel.

Beispiele geeigneter epoxidgruppenhaltiger Vernetzungsmittel für diese Bindemittel sind die vorstehend beschriebenen epoxidgruppenhaltigen Bindemittel oder niedermolekulare, mindestens zwei Glycidylgruppen enthaltende Verbindungen, insbesondere Pentaerythrittetraglycidylether oder Triglycidylisocyanurat.

Darüber hinaus können die Pulverklarlacke die vorstehend beschriebenen Vernetzungsmittel, insbesondere Tris(alkoxycarbonylamino)triazine. enthalten.

Beispiele geeigneter Pulverslurry-Klarlacke sind beispielsweise aus der US-Patentschrift US-A-4,268,542 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen die vorstehend beschriebenen Pulverklarlacke in einem wäßrigen Medium dispergiert.

UV-härtbare Klarlacke gehen beispielsweise aus den Patentschriften EP-A-0 540 884, EP-A- 0 568 967 oder US-A-4,675,234 hervor.

Sie enthalten bekanntermaßen mit aktinischem Licht und/oder Elektronenstrahlung härtbare niedermolekulare, oligomere und/oder polymere Verbindungen, vorzugsweise strahlenhärtbare Bindemittel, insbesondere auf Basis ethylenisch ungesättigter Präpolymerer und/oder ethylenisch ungesättigter Oligomerer, gegebenenfalls einen oder mehrere Reaktivverdünner sowie gegebenenfalls einen oder mehrere Photoinitiatoren. Beispiele geeigneter strahlenhärtbarer Bindemittel sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel eingesetzt, die frei von aromatischen Struktureinheiten sind.

Als strahlenhärtbare Reaktivverdünner kommen niedermolekulare polyfunktionelle ethylenisch ungesättigte Verbindungen in Betracht. Beispiele geeigneter Verbindungen dieser Art sind Ester der Acrylsäure mit Polyolen, wie Neopentylglykoldiacrylat, Trimethylolpropantriacrylat, Pentaerythrittriacrylat oder Pentaerythrittetraacrylat; oder Umsetzungsprodukte von Hydroxyalkylacrylaten mit Polyisocyanaten, insbesondere aliphatischen Polyisocyanaten.

Die vorstehend beschriebenen Bestandteile der Klarlacke können so miteinander kombiniert werden, daß Einkomponenten(1K)-, Zweikomponenten(2K)- oder Mehrkomponenten(3K. 4K)-Klarlacke, Pulverklarlacke und Pulverslurry-Klarlacke resultieren, die thermisch und/oder mit aktinischer Strahlung härtbar sind.

Darüber hinaus können die Klarlacke übliche und bekannte Additive enthalten.

Beispiele geeigneter Additive sind UV-Absorber; Radikalfänger; Rheologiemittel; Kieselsäuren; kolloidale Metallhydroxide, welche blockierte Isocyanatgruppen aufweisen, wie sie beispielsweise in der Patentschrift EP-A-0 872 500 beschrieben werden; Slipadditive; Polymerisationsinhibitoren; Entschäumer; Verlaufmittel; Biozide; Flammschutzmittel oder filmbildende Hilfsmittel wie Cellulose-Derivate. Wesentlich ist, daß diese Additive die Transparenz und anderen besonderen vorteilhaften Eigenschaften der Klarlackschichten nicht nachteilig beeinflussen, sondern in vorteilhafter Weise variieren und verbessern. Weitere Beispiele geeigneter Additive gehen aus der Patentschrift US-A-5,605,695 hervor.

Die Herstellung der erfindungsgemäßen Beschichtungsstoffe bzw. der erfindungsgemäßen Klarlacke aus ihren Bestandteilen weist keine Besonderheiten auf, sondern erfolgt in üblicher und bekannter Weise durch Vermischen der Bestandteile in geeigneten Mischaggregaten wie Dissolvern.

Der weitere wesentliche Bestandteil der erfindungsgemäßen Mehrschichtlackierung ist die Basislackschicht (A).

Die Basislackschicht (A) ist herstellbar aus einem Beschichtungsstoff (A), vorzugsweise einem wäßrigen Beschichtungsstoff (A), insbesondere einem Wasserbasislack (A), und ist der farbund/oder effektgebende Bestandteil der erfindungsgemäßen Mehrschichtlackierung.

Der erfindungsgemäß besonders bevorzugt verwendete Wasserbasislack (A) enthält bekanntermaßen die folgenden wesentlichen Komponenten in Wasser dispergiert:

(A1) mindestens ein anionisch und/oder nicht ionisch stabilisiertes Polyurethan und

(A2) mindestens ein farb- und/oder effektgebendes Pigment.

Beispiele geeigneter farb- und/oder effektgebender Pigmente (A2) sind Metallplättchenpiamente wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente. Beispiele für geeignete anorganische farbgebende Pigmente (A2) sind Titandioxid, Eisenoxide. Sicotransgelb und Ruß. Beispiele für geeignete organische farbgebende Pigmente (A2) sind Indanthrenblau, Cromophthalrot, Irgazinorange und Heliogenarün.

Desweiteren kann der erfindungsgemäße Beschichtungsstoff organische und anorganische Füllstoffe (A3) in üblichen und bekannten, wirksamen Mengen enthalten. Beispiele für geeignete Füllstoffe sind Kreide, Calciumsulfate, Bariumsulfat, Silikate wie Talk oder Kaolin, Kieselsäuren. Oxide wie Aluminiumhydroxid oder Magnesiumhydroxid, Nanopartikel oder organische Füllstoffe wie Textilfasern. Cellulosefasern, Polyethylenfasern oder Holzmehl.

Der erfindungsgemäße Beschichtungsstoff enthält des weiteren Lackadditive (A4) in üblichen und bekannten, wirksamen Mengen.

Beispiele geeigneter Additive (A4) sind die vorstehend genannten.

Weitere Beispiele geeigneter Additive (A4) sind rheologiesteuernde Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate. Bevorzugt werden als rheologiesteuernde Additive (A4) Polyurethane und/oder Schichtsilikate eingesetzt.

Außerdem kann der Wasserbasislack (A), wenn er nicht nur durch physikalische Trocknung ausgehärtet werden soll. mindestens ein Vemetzungsmittel (A5) in wirksamen Mengen enthalten.

Beispiele geeigneter Vernetzungsmittel (A5) sind die vorstehend beschriebenen Vernetzungsmittel, welche für die Verwendung in Einkomponenten(1K)-Klarlacken geeignet sind. Wird der Wasserbasislack (A) als ein Zweikomponenten(2K)- oder Mehrkomponenten(3K, 4K)-Klarlack ausgelegt, enthält er die vorstehend beschriebenen Polyepoxide und/oder die vorstehend beschriebenen unblockierten Polyisocyanate.

Zahlreiche Beispiele geeigneter anionisch und/oder nicht ionisch stabilisierter Polyurethane (A1) sowie zahlreiche Beispiele geeigneter Zusammensetzungen von Wasserbasislacken (A) gehen aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928. EP-A-0 522 420. EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705. WO 97/49745, WO 97/49747 oder EP-A-0 401 565 hervor.

Methodisch gesehen weist die Herstellung der Wasserbasislack (A) keine Besonderheiten auf, sondern erfolgte nach den üblichen und bekannten Methoden durch Vermischen der Komponenten in geeigneten Mischaggregaten wie Dissolvem.

Die erfindungsgemäße Mehrschichtlackierung kann nach den unterschiedlichsten Verfahren hergestellt werden. Von Vorteil ist es. sie nach dem erfindungsgemäßen Verfahren herzustellen.

Das erfindungsgemäße Verfahren geht aus von dem zu beschichtenden Substrat. Das Substrat kann aus Metall, Holz, Kunststoff, Glas oder Papier bestehen oder diese Stoffe als Verbunde enthalten. Vorzugsweise handelt es sich um Automobilkarosserieteile oder industrielle Bauteile, inclusive Container. aus Metall.

Das Substrat kann mit einer Grundierung versehen sein. Im Falle von Kunststoffen handelt es sich um eine

sogenannte Hydrogrundierung, welche vor der Applikation des Basislacks (A). insbesondere des Wasserbasislacks (A), ausgehärtet wird. Im Falle von Metallen, insbesondere Automobilkarosserieteilen, handelt es sich um übliche und bekannte ausgehärtete Elektrotauchlacke, auf die ein Füller appliziert und eingebrannt wird.

In erfindungsgemäßer Verfahrensweise wird der Basislacks (A) in einem Verfahrensschritt (I) auf die Oberfläche des Substrats aufgebracht und zwischengetrocknet (Verfahrensschritt II), indes nicht ausgehärtet.

In einem Verfahrensschritt (III) wird auf die Oberfläche der Basislackschicht ein erster Klarlack (B) aufgetragen, welcher später die Zwischenschicht bildet.

Im Verfahrensschritt (IV) werden die Schichten (A) und (B) gemeinsam ausgehärtet (Naß-innaß-Verfahren). Hierbei kann die Schicht (B) je nach ihrer Zusammensetzung thermisch und/oder mit aktinischer Strahlung ausgehärtet werden. Was die thermische Härtung betrifft, richtet sich die Einbrenntemperatur vor allem danach, ob die Beschichtungsstoffe (A) und (B) Einkomponenten(1K)- oder Zweikomponenten(2K)- oder Mehrkomponenten(3K, 4K)-Systeme sind. Im Falle von Einkomponenten(1K)-Systemen werden im allgemeinen Einbrenntemperaturen oberhalb 120 °C angewandt. Im Falle von Zweikomponenten(2K)- oder Mehrkomponenten(3K, 4K)-Systemen liegen die Einbrenntemperaturen üblicherweise unter 100 °C, insbesondere unter 80 °C.

Erfindungsgemäß wird auf die Oberfläche der Klarlackschicht (B) im Verfahrensschritt (V) die Klarlackschicht (C) appliziert und in Verfahrensschritt (VI) ausgehärtet. Für die Härtung werden je nach verwendetem Klarlack (C) die vorstehend beschriebenen Methoden angewandt. Diese Variante des erfindungsgemäßen Verfahrens kommt vor allem bei der Autoreparaturlackierung zum Tragen. Ein Anschleifen der Klarlackschicht (B) zu Zwecken der Verbesserung der Zwischenschichthaftung ist nicht mehr nötig.

Alternativ zu dieser Variante des erfindungsgemäßen Verfahrens wird die im Verfahrensschritt (III) applizierte Klarlackschicht (B) im Verfahrensschritt (IV) nur zwischengetrocknet. Hiernach wird im Verfahrensschritt (V) die Klarlackschicht (C) naß-in-naß appliziert. wonach man die Lackschichten (A), (B) und (C) gemeinsam aushärtet.

Bei dem erfindungsgemäßen Verfahren können die Beschichtungsstoffe (A), (B) und (C) durch übliche Applikationsmethoden. wie z.B. Spritzen. Rakeln, Streichen, Gießen, Tauchen oder Walzen auf die Substrate aufgebracht werden. Für die Aushärtung können die üblichen und bekannten Methoden wie Erhitzen in einem Umluftofen, Bestrahlen mit IR-Lampen sowie gegebenenfalls mit UV-Lampen angewandt werden.

Innerhalb der erfindungsgemäßen Mehrschichtlackierung kann die Dicke der einzelnen Schichten (A), (B) und (C) breit variieren. Erfindungsgemäß ist es indes von Vorteil, wenn die Basislackschicht (A) eine Dicke von 5 bis 25 µm, insbesondere 7 bis 15µm, und die beiden Klarlackschichten (B) und (C) insgesamt eine Dicke von 15 bis 120 µm, vorzugsweise 40 bis 80 µm und insbesondere 60 bis 70 µm aufweisen. Hierbei kann das Verhältnis der Schichtdicken breit variieren, indes ist es auch aus wirtschaftlichen Gründen von Vorteil, wenn die Klarlackschicht (B) die dickere der beiden Schichten ist. Diese Klarlackschicht (B) kann dann sozusagen die Grundeigenschaften der mehrschichtigen Klarlackschicht liefern, wogegen über die Klarlackschicht (C) mit ihrer anderen, gegebenenfalls speziell ausgewählten Zusammensetzung die besonders gewünschten anwendungstechnische Eigenschaften eingestellt werden.

Die erfindungsgemäße Mehrschichtlackierung weist hervorragende optische, mechanische und chemische Eigenschaften auf. So ist sie frei von jeglichen Oberflächenstörungen wie Schrumpf (wrinkling). Sie ist von hervorragender Transparenz und Kratzfestigkeit. Delamination wegen mangelhafter Zwischenschichthaftung ist nicht zu beobachten. Die Etchbeständigkeit ist hervorragend. Der ganz besondere Vorteil der erfindungsgemäßen Mehrschichtlackierung liegt darin. daß das Eigenschaftsprofil ihrer Oberfläche ganz besonders bereit variiert und daher den unterschiedlichsten Anforderungen einfach und genau angepaßt werden kann.

**Beispiele und Vergleichsversuche**

**Herstellbeispiele 1 bis 6**

**1. Die Herstellung eines Polyacrylats**

In einem Laborreaktor mit einem Nutzvolumen von 4 l, ausgestattet mit einem Rührer, zwei Tropftrichtern für die Monomermischung resp. Initiatorlösung, Stickstoffeinleitungsrohr, Thermometer und Rückflußkühler, wurden 640,6 g einer Fraktion aromatischer Kohlenwasserstoffe mit einem Siedebereich von 158 - 172°C eingewogen. Das Lösemittel wurde auf 140 °C aufgeheizt. Nach Erreichen von 140 °C wurden eine Monomermischung aus 597 g Ethylhexylacrylat, 173,2 g Hydroxyethylmethacrylat, 128,4 g Styrol und 385,2 g 4-Hydroxybutylacrylat innerhalb von 4 Stunden und eine Initiatorlösung von 25,6 g t-Butylperethylhexanoat in 50 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden bei 140 °C gehalten und danach abgekühlt. Die resultierende Polymerlösung hatte einen Feststoffgehalt von 65%, bestimmt in einem Umluftofen 1 h bei 130 °C.

**2. Die Herstellung-eines Polyacrylats als Reibharz**

In einem Laborreaktor mit einem Nutzvolumen von 4 l, ausgestattet mit einem Rührer, zwei Tropftrichtern für die Monomermischung resp. Initiatorlösung, Stickstoffeinleitungsrohr, Thermometer und Rückflußkühler, wurden 720 g einer Fraktion aromatischer Kohlenwasserstoffe mit einem Siedebereich von 158 - 172 °C eingewogen. Das Lösemittel wurde auf 140 °C aufgeheizt. Nach Erreichen von 140 °C wurden eine Monomermischung aus 450 g 2-Ethylhexylmethacrylat. 180 g n-Butylmethacrylat, 210 g Styrol, 180 g Hydroxiethylacrylat, 450 g 4-Hydroxibutylacrylat und 30 g Acrylsäure innerhalb von 4 Stunden und eine Initiatorlösung von 150 g t-Butylperethylhexanoat in 90 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende Polymerlösung hatte einen Feststoffgehalt von 65%, bestimmt in einem Umluftofen 1 h bei 130 °C, eine Säurezahl von 15 und eine Viskosität von 3 dPas (gemessen an einer 60%igen Anlösung der Polymerlösung in dem beschriebenen aromatischen Lösemittel unter Verwendung eines ICI Platte-Kegel Viskosimeters bei 23 °C).

**3. Die Herstellung einer Thixotropierpaste**

In einer Laborrührwerksmühle der Firma Vollrath werden 800 g Mahlgut, bestehend aus 323.2 g des Polyacrylats gemäß Herstellbeispiel 2, 187.2 g Butanol, 200.8 g Xylol und 88.8 g Aerosil® 812 (Degussa AG, Hanau), zusammen mit 1100 g Quarzsand (Korngröße 0.7 - 1 mm) eingewogen und unter Wasserkühlung 30 Minuten angerieben.

**4. Die Herstellung eines Vernetzungsmittels**

In einem 4l-Edelstahlreaktor mit Rührer, Rückflußkühler, Thermometer, Ölheizung und einem Zulaufgefäß für das Blockierungsmittel wurden 41,76 Gewichtsteile Vestanat$^R$ 1890 (Isocyanurat auf der Basis von Isophorondiisocyanat der Firma Creanova) und 20,76 Gewichtsteile Solvenmaphtha eingewogen und auf 50 °C erhitzt. Innerhalb von vier Stunden wurden 23.49 Gewichtsteile Diethylmalonat, 5.81 Gewichtsteile Acetessigsäureethylester und 0.14 Gewichtsteile Katalysatorlösung (Natriumethylhexanoat) gleichmäßige zudosiert. Nach Beendigung des Zulaufs wurden nochmals 0,14 Gewichtsteile Katalysatorlösung hinzugegeben. Im Anschluß daran wurde die Temperatur auf 80 °C erhöht. Bei Erreichen eines Isocyanat-Äquivalentgewichts von 5900 bis 6800 wurden 0,9 Gewichtsteile 1,4-Cyclohexyldimethanol während 30 Minuten bei 80 °C unter Rühren zugegeben. Nach Erreichen eines Isocyanat-Äquivalentgewichts von ≥ 13.000 wurden 5 Gewichtsteile n-Butanol zugegeben. Die Temperatur wurde dabei auf 50 °C gesenkt, und das resultierende blockierte Polyisocyanat wurde mit 2 Gewichtsteilen n-Butanol auf einen theoretischen Festkörpergehalte von 68 Gew.-% angelöst. Das so erhaltene blockierte Polyisocyanat wies einen Festkörpergehalt von 74,5 Gew.-% (eine Stunde; 130 °C) und eine Original-Viskosität von 41.6 dPas auf.

**5. Die Herstellung eines weiteren herkömmlichen Polyacrylats**

In einem Laborreaktor mit einem Nutzvolumen von 4 l, ausgestattet mit einem Rührer, zwei Tropftrichtern für die Monomermischung resp. Initiatorlösung, Stickstoffeinleitungsrohr, Thermometer und Rückflußkühler, wurden 720 g einer Fraktion aromatischer Kohlenwasserstoffe mit einem Siedebereich von 158 - 172 °C eingewogen. Das Lösemittel wurde auf 140 °C aufgeheizt. Nach Erreichen von 140 °C wurden eine Monomermischung aus, 427,5 g n-Burylacrylat, 180 g n-Butylmethacrylat, 450 g Styrol, 255 g Hydroxyethylacrylat, 165 g 4-Hydroxybutylacrylat und 22,5 g Acrylsäure innerhalb von 4 Stunden und eine Initiatorlösung von 120 g t-Butylperethylhexanoat in 90 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende Polymerlösung hatte einen Feststoffgehalt von 60%, bestimmt in einem Umluftofen 1 h bei 130 °C, eine Säurezahl von 13 mg KOH/g, eine OH-Zahl von 116 mg KOH/g. eine Glasübergangstemperatur Tg von 3.23 °C und eine Viskosität von 9 dPas (gemessen an der 60%igen Polymerlösung in dem beschriebenen aromatischen Lösemittel unter Verwendung eines ICI Plane-Kegel Viskosimeters bei 23 °C).

**6. Die Herstellung einer Lösung von Tricyclodecandimethanol**

312 g Tricyclodecandimethanol wurden mit 83 g Butyldiglykolacetat vermischt und unter Erwärmen bis zum Entstehen einer homogenen Lösung gerührt. Die Konzentration der Lösung betrug 79 Gew.-%.

**Beispiel 1 und Vergleichsversuch V1**

**Die Herstellung eines erfindungsgemäßen Einkomponentenklarlacks (Beispiel 1) und eines nicht erfindungsgemäßen Einkomponentenklarlacks (Vergleichsversuch V1)**

Ein erfindungsgemäßer Einkomponentenklarlack (Beispiel 1) und ein herkömmlicher Einkomponentenklarlack (Vergleichsversuch V1) wurden aus den in der Tabelle 1 aufgeführten Bestandteilen durch Vermischen hergestellt.

Tabelle 1:

| **Zusammensetzung des erfindungsgemäßen Einkomponentenklarlacks (Beispiel 1) und des herkömmlichen Einkomponentenklarlacks (Vergleichsversuch V1)** | | |
|---|---|---|
| **Bestandteile** | **Vergleichsvers. V1 (Gew.-Teile)** | **Beispiel 1 (Gew.-Teile)** |
| Polyacrylat gemäß Herstellbeispiel 4 | 43,4 | 43,4 |
| Vernetzungsmittel gemäß Herstellbeispiel 5 | 9,0 | 9,0 |
| Handelsübliches Butanolverethertes Melamin-Formaldehyd-Harz (60%-ig in Butanol/Xylol) | 16,0 | 16,0 |
| Setalux® C91756 (handelsübliches Thixotropierungsmittel der Firma Akzo) | 13.5 | 13,5 |
| Substituiertes Hydroxyphenyltriazin (65 %ig in Xylol) (Cyagard® 1164 L) | 0,6 | 0, 6 |
| Aminoethermodifizierter - 2,2,6,6-Tetramethylpiperydinylester (Tinuvin® 123 der Firma Ciba) | 0,8 | 0,8 |
| Byk® 390 (Byk Chemie) | 0,05 | 0,05 |
| Byk® 310 (Byk Chemie) | 0,15 | 0,15 |
| Tego® LAG 502 | 0,2 | 0,2 |
| Butanol | 11.4 | 11.4 |
| Solvenmaphtha® | 2,5 | 2,5 |
| Xylol | 0,9 | 0,9 |
| Buryldiglykolacetat | 1,5 | 1,5 |
| Tricyclodecandimethanol gemäß Herstellbeispiel 6 | - | 6,0 |
| **SUMME** | **100** | **106** |

Der Klarlack des Vergleichsversuchs V1 wies im DIN4-Becher bei 21 °C eine Auslaufzeit von 46 s auf. Für die Applikation wurde er mit 8 Gewichtsteilen eines Verdünners (organisches Lösemittelgemisch) auf eine Auslaufzeit von 28 s eingestellt.

Der Klarlack des Beispiels 1 wies im DIN4-Becher bei 21 °C eine Auslaufzeit von 51,5 s auf. Für die Applikation wurde er mit 10 Gewichtsteilen eines Verdünners (organisches Lösemittelgemisch) auf eine Auslaufzeit von 28 s eingestellt.

**Beispiel 2 und Vergleichsversuch V2**

**Die Herstellung einer erfindungsgemäßen Mehrschichtlackierung ML (Beispiel 2) und einer nicht erfindungsgemäßen Mehrschichtlackierung (Vergleichsversuch V2)**

Für die Herstellung der erfindungsgemäßen Mehrschichtlackierung ML des Beispiels 2 und der nicht erfindungsgemäßen Mehrschichtlackierung des Vergleichsversuchs V2 wurde zunächst ein Überzugsklarlack durch Vermischen der in der Tabelle 2 angegebenen Bestandteile hergestellt.

Tabelle 2:

| Zusammensetzung des Überzugsklarlacks | |
|---|---|
| **Bestandteile** | **(Gew. -Teile)** |
| Bindemittel | |
| Polyacrylat gemäß Hersteilbeispiel 1<br>Thixotropierpaste gemäß Herstellbeispiel 3 | 50,0<br>3,0 |
| Vernetzungsmittel | |
| TACT | 26,6 |
| Weitere Bestandteile | |
| Substit. Hydroxyphenylbenztriazol (95%-ig in Xylol) (Tinuvin® 292 der Firma Ciba)<br>Aminoethermodifizierter - 2,2,6,6-Tetramethylpiperydinylester(Tinuvin® 400 der Firma Ciba)<br>Handelsübliche Lösung eines polyethermodifizierten Polydimethylsiloxans (5 %ig in Xylol) Byk® 310 (Byk Chemie)<br>Buryldiglykolacetat<br>Butylglykolacetat<br>Solvesso® 150 | 1,0<br>1.2<br>1,4<br>5,5<br>5,5<br>5,8 |
| **SUMME** | **100** |

TACT = handelsübliches Tris(alkoxycarbonylamino)triazin von der Firma CYTEC

Der Überzugsklarlack wies im DIN4-Becher bei 21 °C eine Auslaufzeit von 28 s auf.

Zur Herstellung der Prüftafeln wurden nacheinander ein Elektrotauchlack (Trockenschichtdicke 22 µm) und ein Wasserfüller (FU63-9400 der Firma BASF Coatings AG) appliziert und eingebrannt (Trockenschichtdicke 30 µm). Hierbei wurde der Elektrotauchlack während 20 Minuten bei 170°C und der Füller während 20 Minuten bei 160°C eingebrannt. Anschließend wurde ein blauer Wasserbasislack (Wasser-Percolor-Basislack FW 05-513P der Firma BASF Coatings AG mit einer Schichtdicke von 15 - 18 µm aufgetragen und 10 Minuten bei 80°C abgelüftet.

Anschließend wurden für das Beispiel 2 der Einkomponentenklarlack des Beispiels 1 und für den Vergleichsversuch V2 der Einkomponentenklarlack des Vergleichsversuchs V1 (vgl. Tabelle 1) naß-in-naß appliziert und während 30 Minuten bei 135 °C eingebrannt, so daß Trockenschichtdicken von 35 µm resultierten.

Die so erhaltenen Prüftafeln wurden ohne Zwischenschliff mit dem Überzugsklarlack (vgl. Tabelle 2) überschichtet. Die resultierenden Klarlackschichten wurden während 20 Minuten bei 140°C eingebrannt, so daß Trockenschichtdicken von 20 µm resultierten.

Die Haftung der erfindungsgemäßen Mehrschichtlackierung ML des Beispiels 2 wurde nach 24 Stunden Lagerung bei Raumtemperatur nach dem Gitterschnittest nach DIN 53151 (2 mm) [Note 0 bis 5] ermittelt. Es erfolgte keine Enthaftung: Note GT0. Demgegenüber kann es bei der nicht erfindungsgemäßen Mehrschichtlackierung des Vergleichsversuchs V2 zur Enthaftung der Klarlackierung: Note GT4.

Des weiteren wurden die Haftungseigenschaften der erfindungsgemäßen Mehrschichtlackierung ML des Beispiels 2 und der nicht erfindungsgemäßen Mehrschichtlackierung des Vergleichsversuchs V2 mit Hilfe des Gitterschnittests nach Belastung mit Kondenswasser ermittelt. Die Ergebnisse finden sich in der Tabelle 3. Sie untermauern erneut die überlegene Haftfestigkeit der erfindungsgemäßen Mehrschichtlackierung ML.

Tabelle 3:

| Kondenswasser-Konstantklimatest (KK-Test)[a] und Haftungseigenschaften der erfindungsgemäßen Mehrschichtlackierung ML des Beispiels 2 und der Mehrschichlackierung des Vergleichsversuchs 2 | | |
|---|---|---|
| | **Beispiel 2** | **Vergleichsvers.2** |
| Haftung nach dem Gitterschnittest b) | GT1 | GT5 |

a) übliches Verfahren zur Bewertung der Beständigkeit von Lackmaterialien gegenüber einer Belastung mit Dauerfeuchte (240 Stunden, 100% rel. Feuchte, 40°C, Details in der von der BASF Coatings AG erhältlichen Prüfvorschrift MKK0001A, Ausgabe A/14.05.1996). Die Auswertung erfolgt eine Stunde nach Abschluß der Schwitzwasserbelastung.

b) Gitterschnitt nach DIN 53151 (2 mm) nach 240 Stunden SKK und 24 Stunden Regeneration; Note 0 bis 5: 0 = bester Wert; 5 = schlechtester Wert

**Patentansprüche**

**1.** Verwendung von Tricyclodecandimethanol in einer Menge von 0,2 bis 20 Gew.-%, bezogen auf den Beschichtungsstoff, als Haftvermittler in mehrschichtigen Lackierungen.

**2.** Beschichtungsstoff, insbesondere Klarlack, enthaltend mindestens ein Bindemittel und mindestens ein Vemetzungsmittel sowie Tricyclodecandimethanol in einer Menge von 0,2 bis 20 Gew.-%, bezogen auf den Beschichtungsstoff.

**3.** Der Beschichtungsstoff, insbesondere Klarlack, nach Anspruch 2, **dadurch gekennzeichnet, daß** Tricyclodecandimethanol hierin in einer Menge von 1,0 bis 7,0 Gew.-% und insbesondere 2,0 bis 5,0 Gew.-%, jeweils bezogen auf den Beschichtungsstoff, enthalten ist.

**4.** Verfahren zur Verbesserung der Zwischenschichthaftung in mehrschichtigen Klarlacken, **dadurch gekennzeichnet, daß** man mindestens einem der zur Herstellung der mehrschichtigen Klarlacke verwendeten Beschichtungsmittel Tricyclodecandimethanol in einer Menge von 0,2 bis 20 Gew.-%, bezogen auf den Beschichtungsstoff, zusetzt.

**5.** Das Verfahren nach Anspruch 4, **dadurch gekennzeichnet, daß** man Tricyclodecandimethanol in einer Menge von 0,2 bis 20 Gew.-%, vorzugsweise 1,0 bis 7,0 Gew.-% und insbesondere 2,0 bis 5,0 Gew.-%, jeweils bezogen auf den Beschichtungsstoff, zusetzt.

**6.** Mehrschichtlackierung auf einem gegebenenfalls grundierten Substrat, enthaltend in dieser Reihenfolge übereinander liegend

(A) eine Basislackschicht,

(B) eine erste Klarlackschicht als Zwischenschicht und

(C) eine zweite Klarlackschicht als oberste Schicht,

**dadurch gekennzeichnet, daß** mindestens einer der zur Herstellung der Klarlackschichten (B) und (C) angewandten Beschichtungsstoffe (B) und (C) Tricyclodecandimethanol in einer Menge von 0,2 bis 20 Gew.-%, bezogen auf den Beschichtungsstoff, enthält.

**7.** Die Mehrschichtlackierung nach Anspruch 6, **dadurch gekennzeichnet, daß** sich die Klarlackschichten (B) und (C) stofflich voneinander unterscheiden.

**8.** Verfahren zur Herstellung einer Mehrschichtlackierung, das mindestens die folgenden Verfahrensschritte umfaßt:

(I) Applikation eines Basislacks (A) auf einem gegebenenfalls grundierten Substrat,

(II) Zwischentrocknen des applizierten Basislacks (A),

(III) Applikation eines ersten Klarlacks (B),

(IV) gemeinsames Aushärten der in den Verfahrensschritten (I) und (III) applizierten Schichten (A) und (B) (Naß-in-naß-Verfahren),

(V) Applikation einer stofflich von der ersten Klarlackschicht (B) verschiedenen zweiten Klarlackschicht (C) auf die im Verfahrensschritt (IV) ausgehärtete Klarlackschicht (B) und

(VI) Aushärten der im Verfahrensschritt (V) applizierten Klarlackschicht (C)

oder alternativ

(I) Applikation des Basislacks (A) auf einem gegebenenfalls grundierten Substrat,

(II) Zwischentrocknen des applizierten Basislacks (A),

(III) Applikation des ersten Klarlacks (B),

(IV) Zwischentrocknen des applizierten Klarlacks (B),

(V) Applikation einer zweiten Klarlackschicht (C) auf die im Verfahrensschritt (IV) zwischengetrocknete Klarlackschicht (B) und

(VI) gemeinsames Aushärten der Lackschichten (A), (B), und (C) (Naß-innaß-Verfahren),

**dadurch gekennzeichnet, daß** mindestens einer der zur Herstellung der Klarlackschichten (B) und (C) angewandten Beschichtungsstoffe (B) und (C) Tricyclodecandimethanol in einer Menge von 0,2 bis 20 Gew.-%, bezogen auf den Beschichtungsstoff, enthält.

**9.** Substrate, insbesondere Bauteile für Automobilkarosserien, enthaltend die Mehrschichtlackierung gemäß einem der Ansprüche 6 oder 7 und/oder die gemäß dem Verfahren nach Anspruch 8 hergestellte Mehrschichtlackierung.

## Claims

**1.** The use of tricyclodecanedimethanol in an amount of from 0.2 to 20% by weight, based on the coating material, as an adhesion promoter in multicoat coating systems.

**2.** A coating material, especially a clearcoat material, comprising at least one binder and at least one crosslinking agent and also tricyclodecanedimethanol in an amount of from 0.2 to 20% by weight, based on the coating material.

**3.** The coating material, especially clearcoat material, as claimed in claim 2, containing tricyclodecanedimethanol in an amount of from 1.0 to 7.0% by weight, and in particular from 2.0 to 5.0% by weight, based in each case on the coating material.

**4.** A method of improving the intercoat adhesion in multicoat clearcoats, which comprises adding tricyclodecanedimethanol in an amount of from 0.2 to 20% by weight, based on the coating material, to at least one of the coating compositions used to produce the multicoat clearcoats.

**5.** The method as claimed in claim 4, wherein tricyclodecanedimethanol is added in an amount of from 0.2 to 20% by weight, preferably from 1.0 to 7.0% by weight, and in particular from 2.0 to 5.0% by weight, based in each case on the coating material.

**6.** A multicoat coating system on a primed or unprimed substrate, comprising above one another in this order

(A) a basecoat,

(B) a first clearcoat as intermediate coat, and

(C) a second clearcoat as topmost coat,

wherein at least one of the coating materials (B) and (C) employed to produce the clearcoats (B) and (C) comprises tricyclodecanedimethanol in an amount of from 0.2 to 20% by weight, based on the coating material.

**7.** The multicoat system as claimed in claim 6, wherein the clearcoats (B) and (C) differ materially from one another.

**8.** A process for producing a multicoat coating system, comprising at least the following steps:

(I) applying a basecoat material (A) to a primed or unprimed substrate,

(II) drying the applied basecoat material (A),

(III) applying a first clearcoat material (B),

(IV) curing together the films (A) and (B) applied in steps (I) and (III) (wet-on-wet technique),

(V) applying a second clearcoat film (C), materially different from the first clearcoat film (B), to the clearcoat film (B) cured in step (IV), and

(VI) curing the clearcoat film (C) applied in step (V)

or alternatively

(I) applying the basecoat material (A) to a primed or unprimed substrate,

(II) drying the applied basecoat material (A),

(III) applying the first clearcoat material (B),

(IV) drying the applied clearcoat material (B),

(V) applying a second clearcoat film (C) to the clearcoat film (B) dried in process step (IV), and

(VI) curing together the films (A), (B), and (C) (wet-on-wet technique),

wherein at least one of the coating materials (B) and (C) employed to produce the clearcoats (B) and (C) comprises tricyclodecanedimethanol in an amount of from 0.2 to 20% by weight, based on the coating material.

**9.** A substrate, especially a component for an automobile body, comprising the multicoat system as claimed in either of claims 6 and 7 and/or the multicoat system produced by the process as claimed in claim 8.

## Revendications

**1.** Utilisation de tricyclodécanediméthanol en une quantité de 0,2 à 20 % en poids, par rapport à la matière de revêtement, en tant que promoteur d'adhérence dans des revêtements de peinture multicouches.

**2.** Matière de revêtement, en particulier vernis, contenant au moins un liant et au moins un agent de réticulation ainsi que du tricyclodécanediméthanol en une quantité de 0,2 à 20 % en poids, par rapport à la matière de revêtement.

**3.** Matière de revêtement, en particulier vernis, selon la revendication 2, **caractérisée en ce que** le tricyclodécanediméthanol est contenu dans celle-ci en une quantité de 1,0 à 7,0 % en poids et en particulier de 2,0 à 5,0 % en poids, chaque fois par rapport à la matière de revêtement.

**4.** Procédé pour l'amélioration de l'adhérence entre couches dans des vernis multicouches, **caractérisé en ce qu'**on ajoute au moins à l'une des compositions de revêtement utilisées pour la production des vernis multicouches du tricyclodécanediméthanol en une quantité de 0,2 à 20 % en poids, par rapport à la matière de revêtement.

5. Procédé selon la revendication 4, **caractérisé en ce qu'**on ajoute du tricyclodécanediméthanol en une quantité de 0,2 à 20 % en poids, de préférence de 1,0 à 7,0 % en poids et en particulier de 2,0 à 5,0 % en poids, chaque fois par rapport à la matière de revêtement.

6. Revêtement de peinture multicouche sur un subjectile éventuellement muni d'un primaire, contenant, superposées dans cet ordre

   (A) une couche de peinture de fond,

   (B) une première couche de vernis en tant que couche intermédiaire,

   (C) une seconde couche de vernis en tant que couche supérieure,

   **caractérisé en ce qu'**au moins l'une des matières de revêtement (B) et (C) utilisées pour la production des couches de vernis (B) et (C) contient du tricyclodécanediméthanol en une quantité de 0,2 à 20 % en poids, par rapport à la matière de revêtement.

7. Revêtement de peinture multicouche selon la revendication 6, **caractérisé en ce que** les couches de vernis (B) et (C) diffèrent l'une de l'autre quant à leur composition.

8. Procédé pour la production d'un revêtement de peinture multicouche, qui comprend au moins les étapes suivantes de processus :

   (I) application d'une peinture de fond (A) sur un subjectile éventuellement muni d'un primaire,

   (II) séchage intermédiaire de la peinture de fond (A) appliquée,

   (III) application d'un premier vernis (B),

   (IV) durcissement total simultané des couches (A) et (B) appliquées dans les étapes (I) et (III) du processus (procédé humide-sur-humide),

   (V) application d'une seconde couche de vernis (C), différente quant à sa composition de la première couche de vernis (B), sur la couche de vernis (B) totalement durcie dans l'étape (IV) du processus et

   (VI) durcissement total de la couche de vernis (C) appliquée dans l'étape (V) du processus

   ou bien

   (I) application de la peinture de fond (A) sur un subjectile éventuellement muni d'un primaire,

   (II) séchage intermédiaire de la peinture de fond (A) appliquée,

   (III) application du premier vernis (B),

   (IV) séchage intermédiaire du vernis (B) appliqué,

   (V) application d'une seconde couche de vernis (C) sur la couche de vernis (B) séchée de façon intermédiaire dans l'étape (IV) du processus et

   (VI) durcissement total simultané des couches de peinture (A), (B) et (C) (procédé humide-sur-humide),

   **caractérisé en ce qu'**au moins l'une des matières de revêtement (B) et (C) utilisées pour la production des couches de vernis (B) et (C) contient du tricyclodécanediméthanol en une quantité de 0,2 à 20 % en poids, par rapport à la matière de revêtement.

9. Subjectiles, en particulier composants de carrosseries d'automobiles, contenant le revêtement de peinture multicouche selon la revendication 6 ou 7 et/ou le revêtement de peinture multicouche produit conformément au procédé

selon la revendication 8.